(19) **Europäisches Patentamt / European Patent Office / Office européen des brevets**

(11) **EP 1 249 269 B1**

(12) **EUROPEAN PATENT SPECIFICATION**

(45) Date of publication and mention
of the grant of the patent:
**05.06.2013 Bulletin 2013/23**

(21) Application number: **02008134.5**

(22) Date of filing: **11.04.2002**

(51) Int Cl.:
*B01D 67/00* (2006.01)    *C08J 9/00* (2006.01)
*H01M 2/16* (2006.01)    *C08J 5/18* (2006.01)
*B01D 69/02* (2006.01)    *B01D 69/14* (2006.01)
*B01D 71/26* (2006.01)    *B29C 55/00* (2006.01)
*H01M 10/052* (2010.01)    *H01G 9/02* (2006.01)
*B29K 105/04* (2006.01)    *B29K 105/16* (2006.01)
*B29K 91/00* (2006.01)

(54) **Cell separator made of a thermoplastic resin porous film**

Zellseparator aus einem porösen Film aus thermoplastischem Harz

Séparateur de pile constitué d'un film poreux constitué d'une résine thermoplastique

(84) Designated Contracting States:
**DE FR GB IT NL**

(30) Priority: **12.04.2001 JP 2001113832**

(43) Date of publication of application:
**16.10.2002 Bulletin 2002/42**

(73) Proprietor: **Sumitomo Chemical Company,
Limited
Tokyo 104-8260 (JP)**

(72) Inventors:
• **Atsuhiro,Takata
561-0802 Osaka (JP)**
• **Ryuma,Kuroda
567-0841 Osaka (JP)**
• **Takeshi,Yamada
569-1147 Osaka (JP)**

(74) Representative: **Vossius & Partner
Siebertstrasse 4
81675 München (DE)**

(56) References cited:
**EP-A1- 0 513 390**    **EP-A2- 0 842 758**
**WO-A-97/06206**    **JP-A- 2 002 849**
**JP-A- 63 035 818**    **JP-B- 6 057 142**
**US-A- 4 859 535**    **US-A- 4 994 335**
**US-A- 5 409 588**    **US-A- 5 650 451**
**US-A- 6 127 438**

Remarks:
The file contains technical information submitted after the application was filed and not included in this specification

**Description**

The present invention relates to a cell separator made of a porous film as defined under claim 1. The present invention relates in particular to a porous film made of thermoplastic resin used preferably as a separator for electrolytic capacitors, lithium cells and batteries.

A porous film made of thermoplastic resin is usede.g. as moisture-permeable waterproof clothing, a reverse-osmotic or ultrafiltration membrane, and a separator for electrolytic capacitors, lithium cells and batteries.

The porous film for use as a separator is desired not only to contain an electrolyte, to prevent electrical short circuit between an anode and a cathode, and to have mechanical stability, but also to be excellent in ion permeability in an electrolyte. In particular, the improvement of ion permeability is highly desired with increasing capacity in recent cells.

As the separator using thermoplastic resin as the starting material, a polyolefinporous film is disclosed in e.g. JP-B 50-2176. The structure of pores in the porous film disclosed in this publication is not a network structure but a structure in which pores have been formed straightly in the depth direction of the film, and this porous film is superior in mechanical strength but poor in ion permeability.

To improve ion permeability, it has been proposed in the prior art techniques to make the porous film thinner, but when the film is made thinner, there arise problems such as a reduction in mechanical strength, hazardous electrical short circuit. On the other hand, when the porous film is made thicker for the purpose of prevention of electrical short circuit and improvement of mechanical strength, ion permeability is lowered. Hence, these desired properties cannot be achieved simultaneously, and there is demand for development of a porous film which though having the same thickness, is superior in ion permeability to the conventional porous film.

The documents US 4,994,335 and US 6,127,438 both disclose polyethylene microporous films for cell separators.

An object of the present invention is to provide a porous film having practically sufficient mechanical strength while being excellent in ion permeability.

This object could be achieved on the basis of the finding that a specific structure of pores in the porous film can provide a porous film excellent in ion permeability when used mainly as a cell separator.

The present invention relates to a cell separator made of a porous film made of thermoplastic resin having micropores, wherein the micropores are formed from a 3-dimensional network made of trunk fibrils extending in one direction of the film and branch fibrils through which the trunk fibrils are connected to one another, and the density of the branch fibrils formed is higher than the density of the trunk fibrils formed, and the average pore diameter d ($\mu$m) of the micropores as determined by a bubble-point method (ASTM F316-86) and the average pore radius r ($\mu$m) of the micropores as determined by mercury porosimetry (JIS K1150) satisfy the following relationship:

$$1.20 \leqq 2 \ r/d \leqq 1.70$$

The porous film thus constituted has higher ion permeability than that of a porous film having another type pore structure and is thus preferable e.g. as a separator for electrolytic capacitors, lithium cells and batteries.

By permitting the density of branch fibrils formed to be higher than the density of trunk fibrils formed, the porous film is well-balanced in physical strength between the direction of the maximum thermal shrinkage and a direction perpendicular thereto. It is not always necessary for the branch fibril and trunk fibril to extend in a straight line. The direction of the extending trunk fibril which can be confirmed under an electron microscope is not particularly limited since this direction is determined upon cutting of the film. The "extending in one direction" does not mean that all trunk fibrils extend in parallel in a specific direction, but means that the trunk fibrils are oriented evenly in a specific direction while meandering to a certain degree.

The density of branch fibrils or trunk fibrils to be formed refers to the number of fibrils existing in an area having 1 $\mu$m$^2$ of a film and is determined by observing the surface of the film under a scanning electron microscope. Specifically, the density is determined by counting the number of fibrils existing in an area of 5×5 $\mu$m$^2$. The pore structure of the porous film of the present invention is referred to as "loofah structure".

Preferably, the porous film of the present invention has a Gurley value of 10 to 500 seconds/100 cm$^3$, a void volume of 40 to 80 %, and an average pore diameter d of 0.06 to 3 $\mu$m as determined by the bubble-point method. Further, the thickness of the film is preferably 1 to 200 $\mu$m. The porous film thus constituted is significantly superior in both strength and ion permeability.

The porous film of the present invention is characterized in that the average pore diameter d ($\mu$m) of the micropores as determined by a bubble-point method (ASTM F316-86) and the average pore radius r ($\mu$m) of the micropores as determined by mercury porosimetry (JIS K1150) satisfy the following relationship:

$$1.20 \leqq 2 \ r/d \leqq 1.70$$

When the value of 2r/d is less than 1.20, the porous film is poor in ion permeability, while when it exceeds 1.70, the porous film is poor in strength. From the viewpoint of film strength, the value of 2r/d is preferably 1.65 or less, more preferably 1.60 or less.

The thickness (Y) of the porous film of the present invention is usually 1 to 200 $\mu$m, preferably 5 to 50 $\mu$m and more preferably 5 to 30 $\mu$m. When the film is too thick, the film is poor in ion permeability, while when it is too thin, the film is poor in physical strength. When the average pore diameter d ($\mu$m) and the average pore radius r ($\mu$m) deviate from the relationship defined above, the film is not suitable as a separator.

In the porous film described above, the branch fibrils are oriented preferably in the direction of maximum thermal shrinkage of the film.

By orienting the branch fibrils in the direction of maximum thermal shrinkage of the film, the film has higher mechanical strength in the direction of the maximum thermal shrinkage.

The average pore diameter of micropores in the porous film of the present invention is preferably 0.06 to 3 $\mu$m.

Fig. 1 is an schematic view of the device for measuring the ionic conductivity of the porous film.
Fig. 2 is an electron microphotograph of the porous film in Example 1.
Fig. 3 is an electron microphotograph of the commercial porous film in Comparative Example 1.
Fig. 4 is a graph showing the measurement result of a change with time in specific conductivity.

The thermoplastic resin which serves as the major starting material for the porous film of the present invention is a polyolefin.

The thermoplastic resin constituting the porous film of the present invention may be a mixture of one or more resins.

As the thermoplastic resin, polyolefin type resin is used because it is superior in electrochemical stability or stability in an electrolyte and usable as a porous film excellent in ion permeability in various uses.

Such polyolefin type resin is based on a polymer of one olefin or a copolymer of two or more olefins. The olefin serving as the starting material for the polyolefin resin includes e.g. ethylene, propylene, butene and hexene. The polyolefin used in the present invention comprises at least 10% by weight of polyolefin having a molecular chain length of 2850 nm or more.

In particular, the porous film containing a high-molecular chain polyolefin containing a molecular chain of 2850 nm or more in length is superior in strength and can thus be made thinner while maintaining mechanical strength. Accordingly, the ion permeability can further be improved. It is preferable from the viewpoint of the strength of the porous film that the polyolefin resin contains preferably at least 20% by weight and more preferably at least 30 % by weight of the high-molecular chain polyolefin having a high-molecular chain of 2850 nm or more in length.

The molecular chain length, the weight average molecular chain length, the molecular weight and the weight average molecular weight of the polyolefin can be determined by GPC (gel permeation chromatography), and the proportion of mixed polyolefins (% by weight) in a specific range of molecular chain length or a specific range of molecular weight can be determined by integration of a molecular-weight distribution curve obtained by GPC measurement.

The molecular chain length of the polyolefin, which is determined by GPC (gel permeation chromatography) using polystyrene standards, is specifically a parameter determined by the following procedures.

That is, the mobile phase used in GPC measurement is a solvent in which both an unknown sample to be measured and polystyrene standards of known molecular weights can be dissolved. First, a plurality of polystyrene standards having different molecular weights are measured by GPC, to determine the retention time of each polystyrene standard. Using factor Q of polystyrene, the molecular chain length of each polystyrene standard is determined, whereby the molecular chain length of each polystyrene standard and its corresponding retention time are known. The molecular weight and molecular chain length of each polystyrene standard and factor Q are in the following relationship: Molecular weight = Molecular chain lengthxfactor Q

Then, an unknown sample is measured by GPC, to give a graph of retention time vs. its eluted components. When the length of a molecular chain of a polystyrene standard whose retention time is T in measurement of polystyrene standards by GPC is L, the length of a molecular chain of an eluted component whose retention time is the same T in measurement of the unknown sample by GPC is assumed to be the same L. From this relationship and the relationship between the molecular weights of the polystyrene standards and the retention times of the eluted components in the unknown sample, the distribution of lengths of molecular chains, that is the relationship between the lengths of molecular chains and the eluted components is determined.

The porous film of the present invention may contain fillers such as organic or inorganic fillers.

The porous film of the present invention can contain additives such as stretching aids (e.g. fatty esters and low-molecular polyolefin resin), stabilizers, antioxidants, UV absorbers and flame retardants.

When the polyolefin resin containing a high-molecular chain of 2850 nm or more in length is used as the starting material for the porous film of the present invention, the starting resin and fine powders of an inorganic compound and/or resin are kneaded with a twin-screw kneader segmentally designed such that these materials can be forcibly kneaded, and the kneaded mixture is then formed into a film by rolling, and the resultant raw film is stretched with a stretching machine to give the porous film of the present invention.

As the device used for stretching, any known stretching machines can be used without limitation, and a preferable example is a clip tenter.

The fine powders of the inorganic compound include those having an average particle diameter of 0.1 to 1 $\mu$m, such as aluminum oxide, aluminum hydroxide, magnesium oxide, magnesium hydroxide, hydrotalcite, zinc oxide, iron oxide, titanium oxide, calcium carbonate and magnesium carbonate. Particularly, calcium carbonate or magnesium carbonate is used, and after the porous film is prepared, the above material is preferably dissolved and removed with acidic water to improve ionic conductivity.

The thermoplastic resin constituting the porous film of the present invention may have been crosslinked by irradiation with radiation. The porous film having thermoplastic resin crosslinked therein is superior in heat resistance and strength to a porous film made of non-crosslinked thermoplastic resin.

When the porous film of the present invention is used as an ion-permeablemembrane, the porous film having a thickness of about 3 to 50 $\mu$m is effective in achieving high ionic conductivity. In this case, the porous film made of thermoplastic resin crosslinked by irradiation with radiation is more effective. Usually, when the porous film is formed into a thin film, there is the problem of a reduction in the strength of the film. However, the porous film of the present invention having a thickness of about 3 to 50 $\mu$m and made of thermoplastic resin crosslinked by irradiation with radiation can serve as a high-strength ion-permeable membrane excellent in ionic conductivity.

The porous film of the present invention made of crosslinked thermoplastic resin can be obtained after the porous film of the present invention produced by using non-crosslinked thermoplastic resin is irradiated with radiation.

Although the type of radiation for irradiation of the porous film of the present invention to be crosslinked is not particularly limited, gamma rays, alpha rays or electron rays are preferably used, among which electron rays are particularly preferably used in respect of production rate and safety.

As the source of radiation, an electron ray accelerator having an accelerating voltage of 100 to 3000 kV is preferably used. If the accelerating voltage is less than 100 kV, the depth of penetration of electron rays may be not sufficient, while if the accelerating voltage is higher than 3000 kV, the irradiation unit may be in large scale and economically not advantageous . Examples of the unit for irradiation of radiation include an electron ray scanning unit of Van de Graaff type and an electron ray-fixing conveyor transfer unit of electron curtain type.

The absorbed dose of radiation is preferably 0.1 to 100 Mrad, more preferably 0.5 to 50 Mrad. From the viewpoint of the effect of radiation on crosslinkage of the resin, the absorbed dose is preferably 0.1 Mrad or more, and from the viewpoint of the strength of the resin, the absorbed dose is preferably 100 Mrad or less.

The atmosphere for irradiating the porous film of the present invention with radiation may be air, preferably an inert gas such as nitrogen.

For irradiation with radiation, the porous film of the present invention can also be crosslinked or graft-polymerized by previously mixing or impregnating it with another monomer, compound or polymer and then reacting it by irradiation with radiation. The compound with which the porous film of the present invention is mixed or impregnated includes one or more compounds such as styrene, divinyl benzene, acrylic acid, acrylate, methacrylic acid, methacrylate, fluorinated compounds, sulfonate derivatives and phosphate derivatives of these monomers or polymers.

Whether irradiated with radiation or not, the porous film of the present invention can be impregnated in the pores thereof with another organic or inorganic compound. The compound with which the porous film is impregnated can be suitably selected depending on the intended use of the porous film, and examples of the compound include ion-conductive compounds such as phosphoric acid, sulfuric acid, an electrolyte and ion-exchange resin, as well as chemicals such as insecticides and agrochemicals.

EXAMPLES

Hereinafter, the present invention is descried in more detail by reference to the Examples, which are not intended to limit the present invention.

The physical properties of the porous films in the Examples and Comparative Examples were evaluated in the following evaluation methods.

[Evaluation methods]

(1) Evaluation of ion permeability

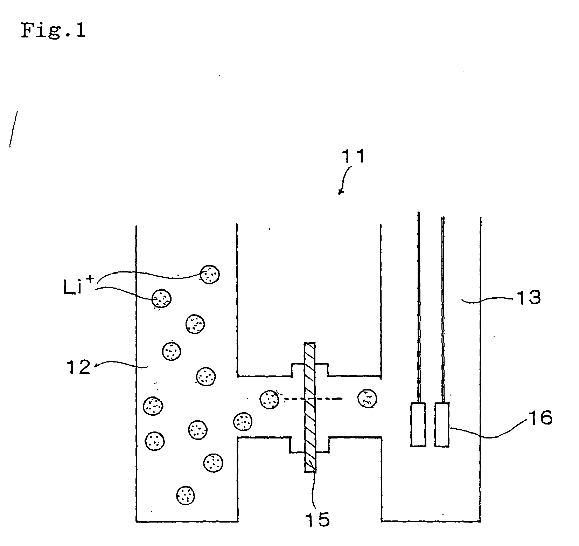

Ion permeability was evaluated by measuring specific conductivity. The laboratory device used for measuring specific conductivity is illustrated in Fig. 1. The measuring device 11 has a pair of cells 12 and 13, and a porous film 15 to be evaluated is arranged between cells 12 and 13.

As shown in Fig. 1, the porous film 15 was arranged between cells 12 and 13, and an electrolyte was introduced into cell 12, while a solvent only was introduced into the other cell 13, and the change with time in the specific conductivity of the solution, caused by ion transfer, was measured with electrodes 16 arranged in cell 13.

This measurement experiment, was conducted using an electrolyte solution wherein $LiPF_6$ was dissolved at a concentration of 1 mol/L as an electrolyte in a mixed solvent of ethylene carbonate, ethyl methyl carbonate and dimethyl carbonate in the ratio of 30 : 35 : 35 by volume. In Fig. 1, $Li^+$ ions are expressed by the symbol $\bigcirc$ . The specific conductivity of the solution was calculated from the cell constant by measuring the resistance of the solution.

Specific conductivity is indicative of the amount of ions which have permeated through the film, and higher specific conductivity with time is indicative of higher ion permeability.

(2) Gurley value

The Gurley value (sec/100 cc) of the film was measured by a B-type densitometer (Toyo Seiki Seisaku-sho, LTD.) according to JIS P8117.

(3) Average pore diameter

The average pore diameter d ($\mu$m) was measured by the bubble-point method according to ASTM F316-86 using Perm-Porometer (manufactured by PMI Ltd.).

(4) Average pore radius

The average pore radius r ($\mu$m) was measured by mercury porosimetry according to JIS K1150 using Auto-Pore III9420 (manufacture by MICROMETRICS Ltd.). The average pore radius was determined by measuring the distribution of pore radii in the range of 0.0032 to 7.4 $\mu$m.

(5) Penetration (literal translation) strength

For determination of penetration strength, a metal needle having a diameter of 1 mm and a needle tip curvature radius of 0.5 mm was penetrated at a rate of 200 mm/min. into the film fixed with a washer having a diameter of 12 mm, and the maximum load by which a hole had been formed in the film was measured and expressed as penetration strength.

[Production of porous film]

Example 1

A twin-screw kneader (produced by Research Laboratory of Plastics Technology Co., Ltd.) segmentally designed such that 30 vol-% calcium carbonate Starpigot 15A (average particle diameter of 0.15 $\mu$m, produced by Shiraishi Calcium Co., Ltd.) could be forcibly kneaded with 70 vol-% mixed polyethylene resin consisting of 70 weight-% polyethylene powder (Highzex Million 340M with an weight average molecular chain length of 17000 nm, an average molecular weight of 3,000,000 and a melting point of 136 °C, produced by Mitsui Chemicals) and 30 weight-% polyethylene wax (High Wax 110P with a weight average molecular weight of 1000 and a melting point of 110 °C, produced by Mitsui Chemicals) was used for kneading these materials, whereby a resin composition was obtained. The content of polyethylene having a molecular chain length of 2850 nm or more in this resin composition was 27 % by weight. This resin composition was subjected to rolling (roll temperature, 150 °C), whereby a raw film of about 70 $\mu$m in thickness was prepared.

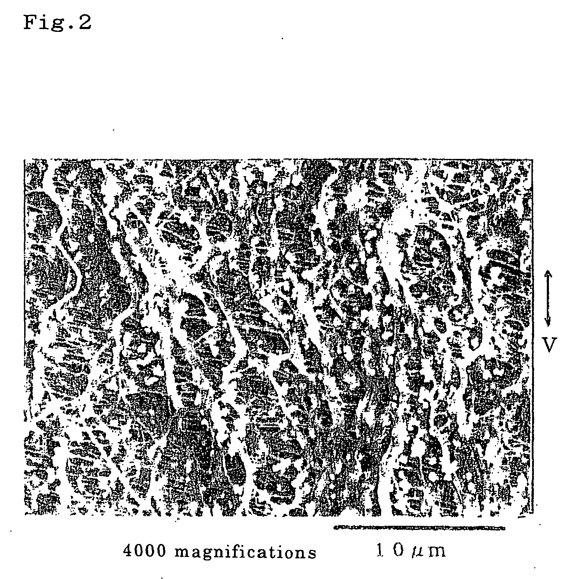

The resultant raw fabric filter was stretched about 5-fold at a stretching temperature of 110 °C with a tenter stretching machine, to give a porous film having a loofah structure. A scanning electron microphotograph of the surface of the resulting porous film is shown in Fig. 2. The slightly thick fibers which are oriented while meandering in the V direction in Fig. 2 are trunk fibrils, while branch fibrils are formed in a direction perpendicular to the V direction. As is evident from Fig. 2, the density of branch fibrils formed is higher than that of trunk fibrils. A large number of micropores have been formed from branch fibrils and trunk fibrils.

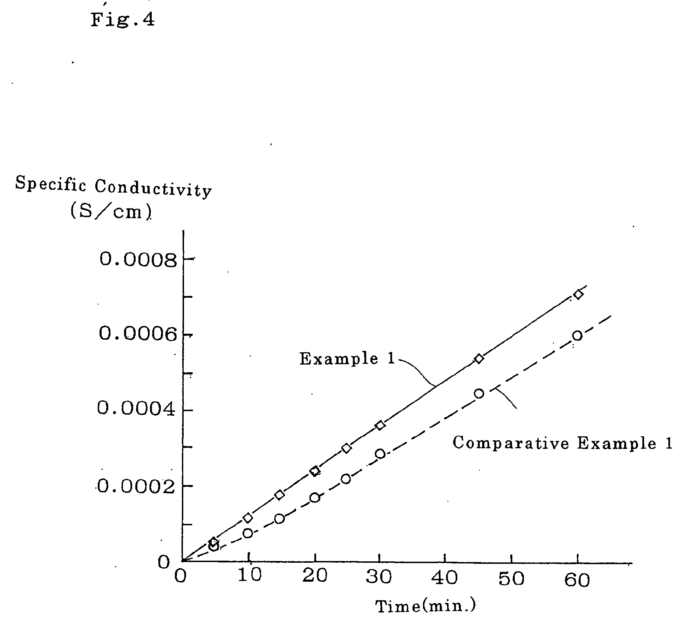

The measurement results of the air permeability, average pore diameter, thickness, average pore diameter d, average pore radius r and 2r/d, and penetration strength of the porous film obtained in Example 1 are collectively shown in Table 1. Further, the change with time in specific conductivity as an indicator of ion permeability was measured and shown in Fig. 4. Comparative Example 1

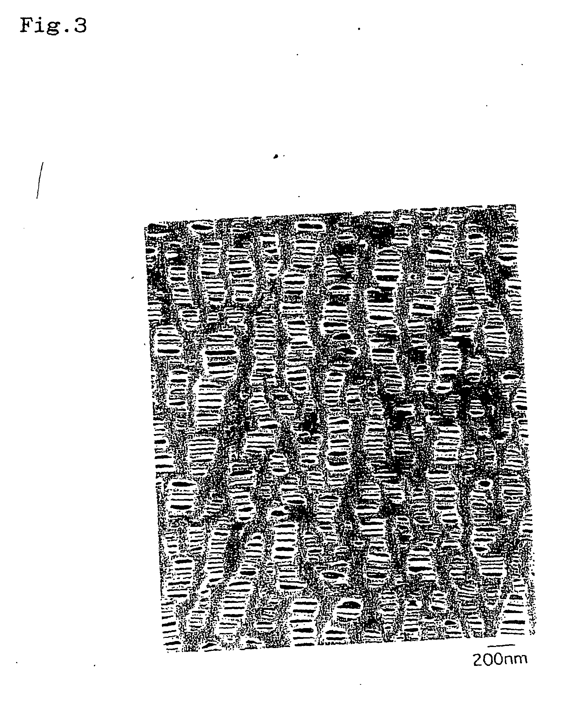

The air permeability, average pore diameter and thickness of a commercial porous film are shown in Table 1. An electron microphotograph thereof is shown in Fig. 3, and the measurement result of ion permeability is shown in Fig. 4. This porous film is a film formed by molding a laminated film composed of a polypropylene layer/polyethylene layer/polypropylene layer at high draft ratio (take-off speed/extrusion speed), subjecting the laminated film to crystallizing heat treatment, stretching it at low temperature, and stretching it at high temperature to release the crystalline interface therefrom. As is evident from Fig. 3, this porous film does not have the loofah structure.

The measurement results of the air permeability, average pore diameter, thickness, average pore diameter d, average pore radius r and 2r/d, and penetration strength of the porous film obtained in Comparative Example 1 are collectively shown in Table 1. Further, the change with time in specific conductivity as an indicator of ion permeability was measured and shown in Fig. 4.

As shown in Fig. 4, the porous film of the present invention having a loofah structure in Example 1 is about 1.7 times as thick as that of the porous film in Comparative Example 1, but the change ( = slope) with time in the specific conductivity thereof is larger, thus indicating that the amount of ions having permeated therethrough per unit time is higher, that is, the ion permeability thereof is higher.

Table 1

|  | Gurley air permeabi lity(sec /100 cc) | Film thickne ss (μm) | Average pore diameter d(μm) | Average pore radius r(μm) | 2r/ d | Penetrati on strength (N) |
|---|---|---|---|---|---|---|
| Example 1 | 90 | 42 | 0.129 | 0.095 | 1.4 7 | 6.9 |
| Comparati ve example 1 | 610 | 25 | 0.050 | 0.029 | 1.1 6 | 3.3 |

As illustrated above, the porous film of the present invention can improve ion permeability by having a loofah structure.

**Claims**

1.   A cell separator made of a porous film made of thermoplastic resin having micropores, wherein the micropores are formed from a 3-dimensional network made of trunk fibrils extending in one direction of the film and branch fibrils through which the trunk fibrils are connected to one another, and the density of the branch fibrils formed is higher than the density of the trunk fibrils formed, and the average pore diameter d (μm) of the micropores as determined by a bubble-point method (ASTM F316-86) and the average pore radius r (μm) of the micropores as determined by mercury porosimetry (JIS K1150) satisfy the following relationship:

$$1.20 \leqq 2\ r/d \leqq 1.70,$$

wherein the thermoplastic resin is a polyolefin, and wherein the polyolefin comprises at least 10 % by weight of a polyolefin having a molecular chain length of 2850 nm or more.

2.   The cell separator made of a porous film according to claim 1, wherein the branch fibrils are oriented in the direction of maximum thermal shrinkage of the film.

3.   The cell separator made of a porous film according to claim 1 or 2, wherein the micropores have an average pore diameter d of 0.06 to 3 μm.

**Patentansprüche**

1. Ein Zellseparator aus einem porösen Film aus thermoplastischem Harz mit Mikroporen, wobei die Mikroporen aus einem 3-dimensionalen Netzwerk gebildet werden, welches aus Stammfibrillen, die sich in eine Richtung des Films erstrecken, und Zweigfibrillen, durch welche die Stammfibrillen miteinander verbunden sind, besteht, und wobei die Dichte der gebildeten Zweigfibrillen höher ist als die Dichte der gebildeten Stammfibrillen, und wobei der mittlere Porendurchmesser d ($\mu$m) der Mikroporen, bestimmt mittels eines Bubble-Point-Verfahrens (ASTM F316-86), und der mittlere Porenradius r ($\mu$m) der Mikroporen, bestimmt mittels Quecksilberporosimetrie (JIS K1150), die folgende Beziehung erfüllen:

$$1,20 \leq 2\,r\,/\,d \leq 1,70 \qquad ,$$

wobei das thermoplastische Harz ein Polyolefin ist, und wobei das Polyolefin mindestens 10 Gewichts-% eines Polyolefins mit einer molekularen Kettenlänge von 2850 nm oder mehr umfasst.

2. Der Zellseparator aus einem porösen Film nach Anspruch 1, wobei die Zweigfibrillen in der Richtung der maximalen thermischen Schrumpfung des Films ausgerichtet sind.

3. Der Zellseparator aus einem porösen Film nach Anspruch 1 oder 2, wobei die Mikroporen einen mittleren Porendurchmesser d von 0,06 bis 3 $\mu$m haben.

**Revendications**

1. Séparateur de pile constitué d'un film poreux constitué d'une résine thermoplastique présentant des micropores, dans lequel les micropores sont formés à partir d'un réseau 3-dimensionnel constitué de fibrilles de tronc s'étendant dans une direction du film et de fibrilles de ramification par lesquelles les fibrilles de tronc sont connectées les unes aux autres, et la densité des fibrilles de ramification formées est supérieure à la densité des fibrilles de tronc formées, et le diamètre moyen de pore d ($\mu$m) des micropores comme déterminé par un procédé de point de bulle (ASTM F316-86) et le rayon moyen de pore r ($\mu$m) des micropores comme déterminé par une porosimétrie au mercure (JIS K1150) satisfont la relation suivante :

$$1,20 \leq 2\,r/d \leq 1,70$$

dans lequel la résine thermoplastique est une polyoléfine, et dans lequel la polyoléfine comprend au moins 10 % en masse d'une polyoléfine ayant une longueur de chaîne moléculaire de 2 850 nm ou supérieure.

2. Séparateur de pile constitué d'un film poreux selon la revendication 1, dans lequel les fibrilles de ramification sont orientées dans la direction de retrait thermique maximal du film.

3. Séparateur de pile constitué d'un film poreux selon la revendication 1 ou 2, dans lequel les micropores présentent un diamètre moyen de pore d de 0,06 à 3 $\mu$m.

Fig.1

Fig.2

4000 magnifications      1 0 μm

Fig.3

200nm

Fig.4

**EP 1 249 269 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50002176 B
- US 4994335 A
- US 6127438 A